# EUROPÄISCHE PATENTSCHRIFT

(11) **EP 0 386 729 B1**
(45) Veröffentlichungstag und Bekanntmachung des Hinweises auf die Patenterteilung: **11.08.1993**
(21) Anmeldenummer: 90104348.9
(22) Anmeldetag: 07.03.1990
(51) Int. Cl.: B25J 19/00, B23Q 11/04, F16D 7/06

(54) **Bei Überlast selbsttätig ausrastbare hydraulische Kupplung**
Automatically disengageable hydraulic overload clutch
Accouplement hydraulique déclenchable automatiquement en cas de surcharge

(30) Priorität: 09.03.1989 DE 3907553
(43) Veröffentlichungstag der Anmeldung: 12.09.1990
(73) Patentinhaber: EDAG Engineering + Design Aktiengesellschaft, 36039 Fulda (DE)
(72) Erfinder: Brindlmayer, Franz, D-5010 Bergheim-Glessen (DE)
(74) Vertreter: Schlagwein, Udo, Dipl.-Ing.

(56) Entgegenhaltungen:
- EP-A- 0 162 220
- EP-A- 0 194 234
- DD-A- 144 725
- DE-U- 8 713 062
- US-A- 4 673 329

## Beschreibung

Die Erfindung betrifft eine bei Überlast selbsttätig ausrastbare Kupplung zwischen zwei Bauteilen, insbesondere zwischen einem Antriebsteil und einem Arbeitselement eines Industrieroboters, welche mehrere Rasteinrichtungen mit jeweils einem gegen die Kraft einer Feder verschieblichen Rastkörper aufweist, der jeweils in eine Rastvertiefung des anderen Bauteils eingreift. Eine solche Kupplung ist beispielsweise im DE-GM 87 13 062.9 beschrieben.

Das genannte Gebrauchsmuster betrifft eine Ladeeinrichtung für eine Werkzeugmaschine. Bei solchen Ladeeinrichtungen besteht die Gefahr einer Kollision der als Greifer ausgebildeten Arbeitselemente mit der Werkzeugmaschine. Um hierbei einen Schaden möglichst zu vermeiden, sind die Greiferarme des Zangenkopfes ausrastbar mit dem Zangenkopf verbunden. Hierzu ist im Zangenkopf für jeden Greiferarm jeweils ein Rastkörper angeordnet, der jeweils von einer Druckfeder in eine Rastvertiefung des Greiferarmes vorgespannt ist.

Bei Kupplungen, welche bei Überlast ausrasten, kommt es oftmals darauf an, die Ausrastkraft genau einstellen zu können. Das könnte beispielsweise durch Verändern der Federkraft mittels einer Stellschraube erfolgen. Weist die Kupplung jedoch mehrere Rastkörper auf, dann würde eine solche Verstellbarkeit erheblichen konstruktiven Aufwand bedingen und das Verstellen der einzelnen Druckfedern wäre zeitaufwendig.

Der Erfindung liegt die Aufgabe zugrunde, eine bei Überlast selbsttätig ausrastbare Kupplung der eingangs genannten Art so auszubilden, daß eine Verstellbarkeit der Ausrastkraft mit möglichst geringem Aufwand möglich ist und das Verstellen selbst möglichst einfach und rasch erfolgen kann.

Diese Aufgabe wird erfindungsgemäß dadurch gelöst, daß die Rastkörper jeweils vom Druck eines ihnen zugeordneten Druckraumes zur Rastvertiefung hin vorgespannt sind und die Druckräume aller Kolben mit einem allen Druckräumen gemeinsamen Arbeitsraum eines Federspeicherzylinders Verbindung haben, in dem ein gegen eine Druckfeder abgestützter, den Arbeitsraum druckbeaufschlagender Spannkolben vorgesehen ist.

Durch diese Gestaltung genügt die Druckfeder im Federspeicherzylinder, um die Ausrastkraft aller Rastkörper festzulegen. Deshalb ist ein Verändern der Ausrastkraft sehr leicht durch Verändern des Druckes im Druckmittelsystem möglich. Da die Druckräume aller Rastkörper miteinander Verbindung haben, werden alle Rastkörper stets mit genau gleichen Drücken beaufschlagt, so daß die Ausrastkräfte überall gleich sind. Der konstruktive Aufwand für die erfindungsgemäße Kupplung ist wesentlich geringer, als wenn für jeden Rastkörper eine eigene Druckfeder und eigene Einstellmittel vorgesehen sein müßten. Ein weiterer Vorteil der Druckmittelbeaufschlagung aller Rastkörper liegt darin, daß durch eine entsprechende Querschnittswahl des Spannkolbens und der druckmittelbeaufschlagten Fläche der Rastkörper erreicht werden kann, daß im Federspeicherzylinder nur eine relativ schwache Feder vorgesehen sein muß, so daß diese keinen unerwünscht großen Platzbedarf hat. Da die einzelnen Rasteinrichtungen keine eigene Rastfeder benötigen, können sie platzsparend und auch dicht nebeneinander angeordnet werden. Die Zahl der mechanischen Teile ist wesentlich geringer als bei vergleichbaren Anordnungen.

Der die Rastkörper in Rastrichtung vorspannende Druck kann leicht durch die Position eines einfachen, mechanischen Bauteils festgestellt werden, wenn gemäß einer vorteilhaften Ausgestaltung der Erfindung der Spannkolben mit einem Stift aus dem Gehäuse des Federspeicherzylinders herausgeführt ist und der Stift Markierungen für die vorhandene Abschaltkraft aufweist.

Das Ausrasten der Kupplung kann leicht automatisch durch Überwachen der Stellung dieses Stiftes festgestellt werden, wenn gemäß einer anderen Ausgestaltung der Erfindung zur Bestimmung des Hubes des Stiftes ein Sensor vorgesehen ist.

Die Kupplung kann bei Überbeanspruchung in zwei verschiedenen Achsen ausrasten, wenn die Kupplung ein äußeres Bauteil mit einer Aufnahme hat, in die ein in seiner Mantelfläche die Rastaufnahmen aufweisendes inneres Bauteil allseitig schwenkbar eingesetzt ist und wenn die Rasteinrichtungen in radialer Ausrichtung zur Aufnahme im äußeren Bauteil angeordnet sind. Durch die radiale Ausrichtung der Rasteinrichtungen ergibt sich eine gleichmäßige Beanspruchung des Innenteiles und damit eine gleichmäßige, genau vorherbestimmbare Schaltkraft.

Konstruktiv besonders einfach ist die Kupplung gestaltet, wenn das äußere Bauteil zylindrisch ist und die Druckräume der Rastkörper durch eine Ringleitung miteinander verbunden sind und der Federspeicherzylinder an der Mantelfläche des äußeren Bauteiles vorgesehen ist.

Um eine bestimmte Ausrastkraft zu erreichen, muß man im Druckmittelsystem einen bestimmten Druck einstellen. Das kann dadurch erfolgen, daß man von außen das Druckmittelsystem mit einem gewünschten Druck beaufschlagt und es dann von der externen Druckmittelquelle abtrennt. Will man nachträglich die Ausrastkraft verändern, so muß man diesen Druck erhöhen oder erniedrigen, was wiederum durch Verbinden mit einer externen Druckmittelquelle erfolgen kann. Möglich ist es jedoch gemäß einer vorteilhaften Ausgestaltung der Erfindung auch, daß eine Druckeinstellschraube dichtend in den Arbeitsraum des Federspeicherzylinders hineingeführt ist. Man kann dann den Druck im Druckmittelsystem durch mehr oder minder weites Einschrauben der Druckeinstellschraube verändern und den eingestellten Druck an der Stellung des Schaltstiftes ablesen.

Die Druckgrobeinstellung kann auf sehr einfache Weise erfolgen, wenn zum Einfüllen des Hydraulikmediums und zur Druckgrobeinstellung die Ringleitung mit einem Füllnippel verbunden ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die
- Fig. 1: eine teilweise geschnittene Vorderansicht einer erfindungsgemäßen Kupplung,
- Fig. 2: eine Seitenansicht der Kupplung.

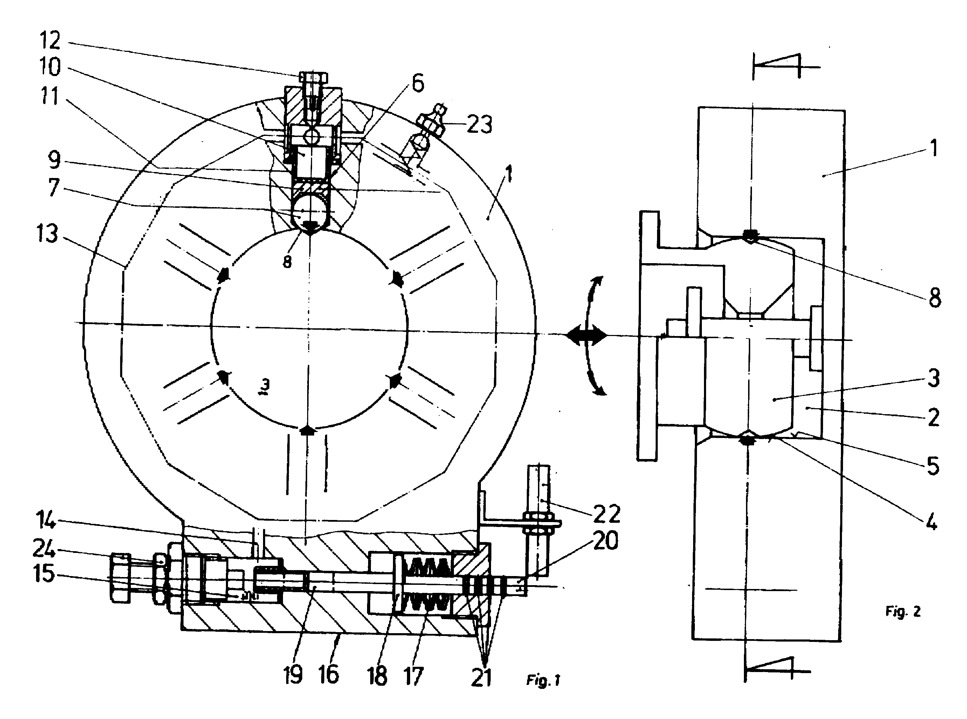

Die Figuren 1 und 2 zeigen ein im wesentlichen kreisscheibenförmiges, äußeres Bauteil 1, welches eine mittige Aufnahme 2 aufweist. Wie insbesondere in Figur 2 zu sehen ist, sitzt in dieser Aufnahme 2 ein inneres Bauteil 3, welches eine ballige Mantelfläche 4 hat, mit der es gegen eine zylinderförmige Innenmantelfläche (5) der Aufnahme 2 anliegt.

Im äußeren Bauteil 1 sind insgesamt sechs Rasteinrichtungen 6 sternförmig angeordnet, von denen in Figur 1 eine Rasteinrichtung 6 im Schnitt dargestellt ist und die anderen nur angedeutet sind. Jede Rasteinrichtung 6 hat einen als Schaltkugel ausgebildeten Rastkörper 7, welcher im eingekuppelten Zustand in eine Rastvertiefung 8 des inneren Bauteiles 3 eingerastet ist. Der Rastkörper 7 stützt sich gegen einen Kolben 9 ab, der seinerseits gegen eine einen Druckraum 10 begrenzende Rollmembran 11 anliegt. Eine Entlüftungsschraube 12 ermöglicht eine Entlüftung dieses Druckraumes 10. Die dem Druckraum 10 entsprechenden Druckräume der anderen Rasteinrichtungen sind über eine Ringleitung 13 miteinander verbunden. Diese Ringleitung 13 hat über einen Kanal 14 mit einem Arbeitsraum 15 eines Federspeicherzylinders 16 Verbindung. Dieser Federspeicherzylinder 16 hat einen von einer Druckfeder 17 vorgespannten Spannkolben 18, welcher mit einem Stößel 19 dichtend in den Arbeitsraum 15 greift. Dadurch wird in dem Arbeitsraum 15 und mithin auch über den Kanal 14 und die Ringleitung 13 in allen Druckräumen 10 ein vom Druck der Druckfeder 17 bestimmter Flüssigkeitsdruck erzeugt.

Die Figur 1 läßt weiterhin erkennen, daß der Spannkolben 18 mit einem Stift 20 aus dem Gehäuse des Federspeicherzylinders 16 herausgeführt ist. Dieser Stift 20 hat auf seiner Mantelfläche Markierungen 21 in Form von Kerben, die beim Spannen des Spannkolbens 18 und damit bei einem Herauswandern des Stiftes 20 aus dem Gehäuse des Federspeicherzylinders 16 an einem Sensor 22 vorbei beweglich sind.

Wenn die erfindungsgemäße Kupplung für einen Industrieroboter eingesetzt wird, dann verbindet man das äußere Teil 1 mit dem Roboter und schließt am inneren Bauteil 3 die Zange des Roboters an. Durch ein Füllnippel 23 füllt man Hydraulikmedium in das System und baut nach dem Schließen der Entlüftungsschrauben 12 einen solchen Druck auf, daß die Kupplung eine gewünschte Haltekraft ausübt. Danach wird der Sensor 22 so justiert, daß er beispielsweise mit einer der Markierungen 21 fluchtet. Kommt es bei der Zange zu einer Überlast, dann gelangen die Rastkörper 7 aus den Rastvertiefungen 8, so daß das innere Bauteil sich frei bewegen kann. Das beim Ausrasten aus den Druckräumen 10 verdrängte Druckmittel wird in den Arbeitsraum 15 bewegt, was ein zusätzliches Spannen der Druckfeder 17 zur Folge hat, so daß der Stift 20 weiter aus dem Federspeicherzylinder 16 gelangt, was vom Sensor 22 feststellbar ist, so daß dieser ein Signal zum Abschalten des Roboters geben kann.

Bei dem dargestellten Ausführungsbeispiel ist der Arbeitsraum 15 durch eine Druckfeineinstellschraube 24 verschlossen, die mehr oder minder weit in den Arbeitsraum 15 zu schrauben ist, um den Druck im hydraulischen System verändern zu können.

## Patentansprüche

1. Bei überlast selbsttätig ausrastbare Kupplung zwischen zwei Bauteilen, insbesondere zwischen einem Antriebsteil und einem Arbeitselement eines Industrieroboters, welche in einem Bauteil mehrere Rasteinrichtungen mit jeweils einem gegen die Kraft einer Feder verschieblichen Rastkörper aufweist, der jeweils in eine Rastvertiefung des anderen Bauteils eingreift, dadurch gekennzeichnet, daß die Rastkörper (7) jeweils vom hydraulischen Druck eines ihnen zugeordneten Druckraumes (10) zur Rastvertiefung (8) hin vorgespannt sind und die Druckräume (10) aller Kolben (9) mit einem allen Druckräumen (10) gemeinsamen Arbeitsraum (15) eines Federspeicherzylinders (16) Verbindung haben, in dem ein gegen eine Druckfeder (17) abgestützter, den Arbeitsraum druckbeaufschlagender Spannkolben (18) vorgesehen ist.

2. Kupplung nach Anspruch 1, dadurch gekennzeichnet, daß der Spannkolben (18) mit einem Stift (20) aus dem Gehäuse des Federspeicherzylinders (16) herausgeführt ist und der Stift (20) Markierungen (21) für die vorhandene Abschaltkraft aufweist.

3. Kupplung nach Anspruch 2, dadurch gekennzeichnet, daß zur Bestimmung des Hubes des Stiftes (20) ein Sensor (22) vorgesehen ist.

4. Kupplung nach zumindest einem der vorangehenden Ansprüche, dadurch gekennzeichnet, daß die Kupplung ein äußeres Bauteil (1) mit einer Aufnahme (2) hat, in der ein in seiner Mantelfläche (4) die Rastaufnahmen (8) aufweisendes inneres Bauteil (3) allseitig schwenkbar eingesetzt ist und daß die Rasteinrichtungen (6) in radialer Ausrichtung zur Aufnahme (2) im äußeren Bauteil (1) angeordnet sind.

5. Kupplung nach zumindest einem der vorangehenden Ansprüche, dadurch gekennzeichnet, daß daß äußere Bauteil (1) zylindrisch ist und die Druckräume (10) der Rasteinrichtungen (6) durch eine Ringleitung (13) miteinander verbunden sind und der Federspeicherzylinder (16) an der Mantelfläche des äußeren Bauteils (1) vorgesehen ist.

6. Kupplung nach zumindest einem der vorangehenden Ansprüche, dadurch gekennzeichnet, daß eine Druckfeineinstellschraube dichtend in den Arbeitsraum (15) des Federspeicherzylinders (16) hineingeführt ist.

7. Kupplung nach zumindest einem der vorangehenden Ansprüche, dadurch gekennzeichnet, daß zum Einfüllen des Hydraulikmediums und zur Druckgrobeinstellung die Ringleitung (13) mit einem Füllnippel (23) verbunden ist.

## Claims

1. Automatically disengageable overload clutch between two components, in particular between a driving member and a working element of an industrial robot, which has a plurality of catch arrangements in one component with a respective catch member which is displaceable against the force of a spring and engages in a respective catch recess in the other component, characterised in that the catch members (7) are pretensioned toward the catch recess (8) in each case by the hydraulic pressure of a pressure chamber (10) allocated to them and the pressure chambers (10) of all pistons (9) are connected to a working chamber (15), common to all pressure chambers (10), of a spring store cylinder (16) in which there is provided a tension piston (18) which is supported against a compression spring (17) and loads the working chamber with pressure.

2. Clutch according to claim 1, characterised in that the tension piston (18) is guided from the casing of the spring store cylinder (16) by a pin (20) and the pin (20) has markings (21) for the available cut-off power.

3. Clutch according to claim 2, characterised in that a sensor (22) is provided for determining the stroke of the pin (20).

4. Clutch according to at least one of the preceding claims, characterised in that the clutch has an external component (1) with a receiver (2) in which an internal component (3) having the catch receivers (8) in its surface (4) is inserted so as to be pivotal all round and in that the catch arrangements (6) are arranged radially with respect to the receiver (2) in the external component (1).

5. Clutch according to at least one of the preceding claims, characterised in that the external component (1) is cylindrical and the pressure chambers (10) of the catch arrangements (6) are connected to one another by an annular conduit (13) and the spring store cylinder (16) is provided on the surface of the external component (1).

6. Clutch according to at least one of the preceding claims, characterised in that a pressure-operated precision-adjusting screw is guided in a sealing manner into the working chamber (15) of the spring store cylinder (16).

7. Clutch according to at least one of the preceding claims, characterised in that the annular conduit (13) is connected to a filling nipple (23) for introduction of the hydraulic medium and for pressure-operated rough adjustment.

## Revendications

1. Accouplement du type à déclenchement automatique en cas de surcharge entre deux pièces, en particulier entre une pièce d'entrainement et une pièce de travail d'un robot industriel, et qui comporte dans une de ses pièces plusieurs moyens de blocage (6) avec chacun une pièce de blocage mobile à l'encontre de la force d'un ressort, chacune venant en prise dans une encoche de blocage de l'autre pièce caractérisé en ce que les pièces de blocage (7) sont appliquées chacune dans l'encoche de blocage (8) correspondante sous l'effet de la pression hydraulique d'un volume de pression (10) de l'une d'entre elles. et en ce que les volumes de pression (10) de tous les pistons (9) sont en liaison avec le volume de travail (15) commun à tous les volumes de pression (10), le volume de travail étant dans un cylindre à ressort accumulateur (16) dans lequel est prévu le piston de serrage (18) exerçant la pression du volume de travail (15) en s'appuyant sur un ressort de pression (17).

2. Accouplement selon la revendication 1 caractérisé en ce que le piston de serrage (18) est prolongé vers l'extérieur du cylindre à ressort accumulateur (16) par une tige (20) et en ce que la tige (20) présente des repères (21) pour indiquer la force de déconnexion existante.

3. Accouplement selon la revendication 2 caractérisé en ce qu'un détecteur (22) est prévu pour la détermination de la longueur de sortie de la tige (20).

4. Accouplement selon l'une au moins des revendications précédentes, caractérisé en ce que l'accouplement comporte une pièce extérieure (1) avec un logement (2) dans lequel une pièce interne (3) pouvant osciller librement présente des encoches (8) de blocage sur son enveloppe (4) et en ce que les moyens de blocage (6) sont disposés radialement par rapport au logement (2) de la pièce extérieure (1).

5. Accouplement selon au moins une des revendications précédentes, caractérisé en ce que la pièce extérieure (1) est cylindrique, et en ce que le volume de pression (10) des moyens de blocage (6) sont réunis par une canalisation circulaire (13) et en ce que le cylindre à ressort accumulateur (16) est prévu sur l'enveloppe de la pièce extérieure (1).

6. Accouplement selon au moins l'une des revendications précédentes, caractérisé en ce qu'une vis d'ajustage de pression (15) pénètre de façon étanche dans le volume de travail (15) du cylindre à ressort accumulateur (10).

7. Accouplement selon au moins l'une des revendications précédentes, caractérisé en ce qu'il est équipé d'un raccord de remplissage (23) pour le remplissage du fluide de pression hydraulique et pour le réglage approximatif de la pression de la canalisation circulaire (13).
